# EUROPÄISCHE PATENTSCHRIFT

(11) **EP 3 174 770 B1**
(45) Veröffentlichungstag und Bekanntmachung des Hinweises auf die Patenterteilung: **10.03.2021**
(21) Anmeldenummer: 15725994.6
(22) Anmeldetag: 22.05.2015
(51) Int. Cl.: B60T 17/00, B60T 15/04, F16L 55/033

(54) **VORRICHTUNG ZUR GERÄUSCHMINDERUNG VON ZWEI ZUSAMMENGEFÜHRTEN GASSTRÖMEN**
DEVICE FOR REDUCING THE NOISE OF TWO MERGED GAS STREAMS
DISPOSITIF POUR ATTÉNUER LE BRUIT DE DEUX FLUX GAZEUX RÉUNIS

(30) Priorität: 31.07.2014 DE 102014011423
(43) Veröffentlichungstag der Anmeldung: 07.06.2017
(73) Patentinhaber: WABCO GmbH, 30453 Hannover (DE)
(72) Erfinder: BEIER, Peter, 31515 Wunstorf (DE); DREYER, Werner, 30826 Garbsen (DE); ELZE, Petra, 30455 Hannover (DE); FABIAN, Alexander, 31224 Peine (DE); HÖRSTMANN, Jan, 31275 Lehrte (DE); MARTENS, Bettina, 30161 Hannover (DE); MARTINI, Gerhard, 30989 Gehrden (DE)
(74) Vertreter: Lauerwald, Jörg
(86) Internationale Anmeldenummer: PCT/EP2015/001050
(87) Internationale Veröffentlichungsnummer: WO 2016/015794

(56) Entgegenhaltungen:
- CN-U- 201 544 952
- DE-A1- 10 120 321
- DE-A1- 19 849 284
- DE-A1-102010 039 483

## Beschreibung

Die Erfindung betrifft eine Vorrichtung zur Geräuschminderung von zwei zusammengeführten, in einen gemeinsamen Auslass mündenden konzentrischen Gasströmen, von denen der erste Gasstrom durch ein Rohr geführt ist, welches von einem koaxialen, ringförmigen Kanal zur Führung des zweiten Gasstroms umgeben ist, wobei ein zum gemeinsamen Auslass gerichtetes Ende des Rohres über dem Umfang verteilt zinnenartige Ausnehmungen aufweist.

Eine derartige Vorrichtung ist in Verbindung mit einem elektropneumatischen Regelventil mit einer Führungsanordnung für einen Steuerkolben aus der DE 101 20 321 A1 bekannt. Das Regelventil umfasst ein erstes pneumatisches Ventilsystem, das eine erste Entlüftungseinrichtung in Form eines Rohres zur Führung eines ersten Gasstroms aufweist, sowie ein zweites, simultan durch das erste Ventilsystem betätigbares, zweites pneumatisches Ventilsystem, welches das Rohr zur Führung des ersten Gasstroms radial umgreift und eine zweite Entlüftungseinrichtung in Form eines koaxialen, ringförmigen, das Rohr umgebenden Kanals zur Führung des zweiten Gasstroms aufweist, wobei die beiden Entlüftungseinrichtungen in einen gemeinsamen Schalldämpfer münden, und bei dem das dem Schalldämpfer zugewandte Ende des Rohres auf dem Umfang verteilte zinnenartige Ausnehmungen aufweist. Diese Ausnehmungen werden als Zerklüftungen bezeichnet und sollen ein freies Ausströmen der aus dem Entlüftungskanal austretenden Abluft gewährleisten. Durch diese Anordnung soll bereits insgesamt ein sehr niedriger Geräuschpegel erzielt werden, der selbst strengen Anforderungen an ein gattungsgemäßes Regelventil gerecht wird.

Vor diesem Hintergrund liegt der Erfindung die Aufgabe zugrunde, ein bei der gattungsgemäßen Vorrichtung noch feststellbares Geräusch, beispielsweise ein Pfeifen, zu beseitigen, beziehungsweise dieses wenigstens zusätzlich zu dämpfen.

Gelöst wird diese Aufgabe mit einer Vorrichtung zur Geräuschminderung von zwei zusammengeführten, in einen gemeinsamen Auslass mündenden konzentrischen Gasströmen, von denen der erste Gasstrom durch ein Rohr geführt ist, welches von einem koaxialen, ringförmigen Kanal zur Führung des zweiten Gasstroms umgeben ist, wobei ein zum gemeinsamen Auslass gerichtetes Ende des Rohres über dem Umfang verteilt zinnenartige Ausnehmungen aufweist, bei der die die Ausnehmungen unregelmäßig über dem Umfang verteilt angeordnet sind und/oder eine ungleichmäßige axiale Erstreckung und/oder eine ungleichmäßige umfangsbezogene Erstreckung aufweisen.

Durch Untersuchungen wurde festgestellt, dass die erfindungsgemäße Ausbildung der zinnenartigen Ausnehmungen die am Ende des Rohres auftretenden Turbulenzen so beeinflussen, dass die dadurch entstehenden Geräusche, beispielsweise ein Pfeifen, weitgehend unhörbar werden. Wesentlich ist somit für die Erfindung, dass die aus der DE 101 20 321 A1 bekannten zinnenartigen Ausnehmungen hier unregelmäßig über dem Umfang verteilt angeordnet sind und/oder eine ungleichmäßige axiale Erstreckung und/oder eine ungleichmäßige umfangsbezogene Erstreckung aufweisen, wobei diese zinnenartigen Ausnehmungen als Rechteck- und/oder Dreieck- und/oder Wellenprofil ausgebildet sein können und beliebig kombinierbar sind.

Der erste Gasstrom und der zweite Gasstrom können, wie aus der DE 101 20 321 A1 bekannt, über den gemeinsamen Auslass in einen Schalldämpfer übergehen, wobei der gemeinsame Auslass von einem Schneidring mit einem größeren Durchmesser als der Auslass radial umgeben sein kann. Außerdem kann das dem Auslass abgewandte Ende des Schneidrings eine weichelastische Lippe aufweisen.

Die vorstehend erwähnte Aufgabe wird des Weiteren gelöst durch die Verwendung der Vorrichtung gemäß den vorstehend definierten Merkmalen in einem Regelventil für ein Druckluftbremssystem eines Fahrzeugs zum Ausregeln eines einer gewünschten Bremswirkung entsprechenden Bremsdrucks, wobei das Regelventil ein erstes pneumatisches Ventilsystem, das eine erste Entlüftungseinrichtung in Form des Rohres zur Führung des ersten Gasstroms aufweist, und ein zweites, durch das erste Ventilsystem betätigbares zweites pneumatisches Ventilsystem aufweist, welches das Rohr zur Führung des ersten Gasstroms radial umgreift und eine zweite Entlüftungseinrichtung in Form des koaxialen und ringförmigen, das Rohr radial umgebenden Kanals zur Führung des zweiten Gasstroms aufweist, bei dem die beiden Entlüftungseinrichtungen in einen gemeinsamen Schalldämpfer münden, und bei dem das dem Schalldämpfer zugewandte Ende des Rohres die über dem Umfang verteilten zinnenartigen Ausnehmungen aufweist.

Die Erfindung wird nachstehend anhand mehrerer in der Zeichnung dargestellter Ausführungsbeispiele weiter erläutert. In der Zeichnung zeigt
Fig. 1 einen Längsschnitt durch einen Bremswertgeber, der die erfindungsgemäßen Merkmale aufweist,
Fig. 2 eine Schnittdarstellung eines Rohrendes eines zur Führung des ersten Gasstroms bestimmten Rohres mit einer ersten Ausführungsform der erfindungsgemäßen zinnenartigen Ausnehmungen,
Fig. 3 eine Schnittdarstellung eines Rohrendes zur Führung des ersten Gasstroms, das eine zweite Ausführungsform der erfindungsgemäßen zinnenartigen Ausnehmungen aufweist, und
Fig. 4 eine Schnittdarstellung eines Rohrendes zur Führung des ersten Gasstroms, das eine dritte Ausführungsform der erfindungsgemäßen zinnenartigen Ausnehmungen aufweist.

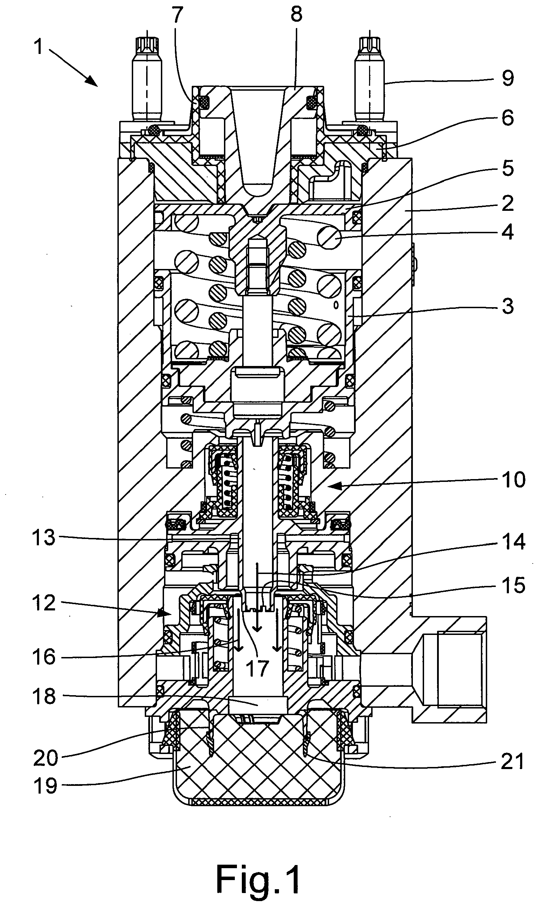

Ein in Fig. 1 dargestellter Bremswertgeber 1 entspricht in seiner konstruktiven Ausbildung und Wirkungsweise einem in der DE 33 43 172 A1 dargestellten und beschriebenen Steuerventil, dessen Funktion nicht Teil der vorliegenden Erfindung ist und dementsprechend auch nicht im Einzelnen beschrieben wird.

Der Bremswertgeber 1 weist ein Gehäuse 2 auf, in dem ein Ventilträgerkolben 3 abgedichtet geführt ist. Der Ventilträgerkolben 3 wird durch eine Druckfeder 4 mit einer Kraft beaufschlagt, und die Druckfeder 4 liegt an ihrem vom Ventilträgerkolben 3 fernen Ende an einer deckelnahen Druckplatte 5 an. Auf die Druckplatte 5 wirkt ein Stößelkolben 8, der in einer Führungshülse 7 axial verschiebbar aufgenommen ist. Die Führungshülse 7 ist in einer axialen Stufenbohrung eines Gehäusedeckels 6 befestigt. Der Gehäusedeckel 6 mittels Befestigungsschrauben 9 mit dem Gehäuse 2 verschraubt. Der Stößelkolben 8 kann beispielsweise mittels eines nicht dargestellten Bremspedals durch einen Fahrzeugführer axial betätigt werden, um einen einer gewünschten Bremswirkung entsprechenden Bremsdruck auszuregeln.

Der Ventilträgerkolben 3 ist Teil eines ersten Ventilsystems 10. Ein zweites Ventilsystem 12 ist koaxial zum ersten Ventilsystem 10 angeordnet und wird simultan mit dem ersten Ventilsystem 10 bei Betätigung des Stößelkolbens 8 zum Ausregeln des einer gewünschten Bremswirkung entsprechenden Bremsdrucks betätigt.

Über die beiden Ventilsysteme 10, 12 lassen sich unabhängige Bremskreise des Druckluftbremssystems des Fahrzeugs mit Druckluft beaufschlagen und entlüften. Zu diesem Zweck ist ein das erste Ventilsystem 10 mit dem zweiten Ventilsystem 12 verbindendes Rohr 13 vorgesehen, dessen Innenraum zur Entlüftung eines ersten, aus dem ersten Ventilsystem 10 austretenden Gasstroms 14 dient. Im Bereich des zweiten Ventilsystems 12 umgreift ein ringförmiger Kanal 15 ein Ende 17 des Rohres 13. Dieser ringförmige Kanal 15 dient zur Entlüftung des zweiten Bremskreises über das zweite Ventilsystem 12, so dass ein zweiter Gasstrom 16 durch diesen ringförmigen Kanal 15 strömt. Der erste Gasstrom 14 und der zweite Gasstrom 16 münden in einen gemeinsamen Auslass 18 und von dort in einen Schalldämpfer 19. In den Schalldämpfer 19 ragt ein Schneidring 20 mit einem größeren Durchmesser als der gemeinsame Auslass 18, und der Schneidring 20 ist an seinem dem Auslass 18 abgewandten Ende auf dem Umfang mit einer weichelastischen Lippe 21 versehen.

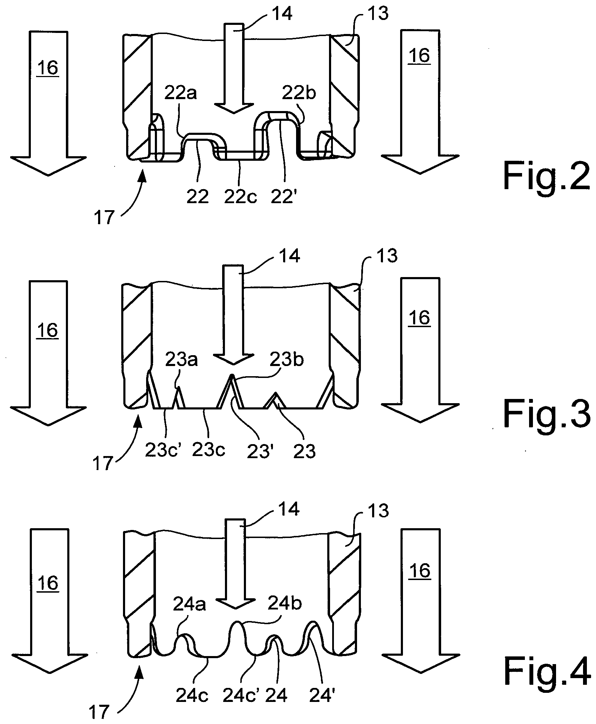

Das genante deckelferne Ende 17 des Rohres 13 weist unregelmäßig über dem Umfang des Endes 17 des Rohres 13 verteilte und/oder eine ungleichmäßige axiale Erstreckung und/oder eine ungleichmäßige umfangsbezogene Erstreckung aufweisende zinnenartige Ausnehmungen 22, 22', 23, 23', 24, 24' auf, die in den Figuren 2 bis 4 im Einzelnen dargestellt sind.

Gemäß Fig. 2 handelt es sich bei den zinnenartigen Ausnehmungen 22, 22' um im Wesentlichen rechteckige Ausnehmungen, die eine unterschiedliche axiale Erstreckung aufweisen. Die umfangsbezogenen Erstreckungen 22c und die Abstände der zinnenartigen Ausnehmungen 22, 22' sind gleich groß, während einige Ausnehmungen 22 eine geringe axiale Erstreckung 22a und andere Ausnehmungen 22' eine größere axiale Erstreckung 22b aufweisen.

Bei den in Fig. 3 dargestellten, zinnenartigen Ausnehmungen 23, 23' ist ein Dreieckprofil vorgesehen, die kleinere axiale Erstreckungen 23a und größere axiale Erstreckungen 23b aufweisen. Die umfangsbezogenen Erstreckungen 23c, 23c' zwischen den dreieckigen, zinnenartigen Ausnehmungen 23, 23' sind unterschiedlich groß, das heißt, die dreieckigen, zinnenartigen Ausnehmungen 23, 23' sind unterschiedlich weit voneinander beabstandet und weisen unterschiedliche axiale Erstreckungen 23a, 23b auf.

Bei dem Ausführungsbeispiel gemäß Fig. 4 sind die zinnenartigen Ausnehmungen 24, 24' mit einem wellenförmigen Profil versehen und weisen kleine axiale Erstreckungen 24a, große axiale Erstreckungen 24b und unterschiedliche umfangsbezogene Erstreckungen 24c, 24c' auf.

Die Unregelmäßigkeit der Abstände der zinnenartigen Ausnehmungen, deren unterschiedlichen axiale Erstreckungen und unterschiedlichen Profile sind wesentlich für die Verminderung des Geräuschpegels des Bremswertgebers 1 beim Entlüften und lassen sich beliebig kombinieren.

Wie in Fig. 2 dargestellt, können die Begrenzungsflächen der zinnenartigen Ausnehmungen 22, 23, 24 abgerundet sein, was ebenfalls zu einer Verminderung des Geräuschpegels beiträgt.

Alle in der vorstehenden Figurenbeschreibung, in den Ansprüchen und in der Beschreibungseinleitung genannten Merkmale sind sowohl einzeln als auch in beliebiger Kombination miteinander einsetzbar. Die Erfindung ist somit nicht auf die beschriebenen und beanspruchten Merkmalskombinationen beschränkt, vielmehr sind alle Merkmalskombinationen als offenbart zu betrachten.

### Bezugzeichenliste (Bestandteil der Beschreibung)

- 1: Bremswertgeber
- 2: Gehäuse
- 3: Ventilträgerkolben
- 4: Druckfeder
- 5: Druckplatte
- 6: Gehäusedeckel
- 7: Führung
- 8: Stößelkolben
- 9: Befestigungsschraube
- 10: Erstes Ventilsystem
- 12: Zweites Ventilsystem
- 13: Rohr
- 14: Erster Gasstrom
- 15: Ringförmiger Kanal
- 16: Zweiter Gasstrom
- 17: Ende des Rohres
- 18: Gemeinsamer Auslass
- 19: Schalldämpfer
- 20: Schneidring
- 21: Weichelastische Lippe
- 22, 22': Rechteckige, zinnenartige Ausnehmungen 22, 22'
- 22a: Geringe axiale Erstreckung der Ausnehmungen 22, 22'
- 22b: Größere axiale Erstreckung der Ausnehmungen 22, 22'
- 22c: Gleichmäßige, umfangsbezogene Erstreckung der Ausnehmungen 22, 22'
- 23, 23': Dreieckige, zinnenartige Ausnehmungen
- 23a: Kleine axiale Erstreckung der zinnenartigen Ausnehmungen 23, 23'
- 23b: Große axiale Erstreckung der zinnenartigen Ausnehmungen 23, 23'
- 23c, 23c': Ungleichmäßige Erstreckung der Ausnehmungen 23, 23'
- 24, 24': Wellenförmige, zinnenartige Ausnehmungen
- 24a: Kleine axiale Erstreckung der zinnenartigen Ausnehmungen 24, 24'
- 24b: Große axiale Erstreckung der zinnenartigen Ausnehmungen 24, 24'
- 24c, 24c': Ungleichmäßige Erstreckung der Ausnehmungen 24, 24'

## Patentansprüche

1. Vorrichtung zur Geräuschminderung von zwei zusammengeführten, in einen gemeinsamen Auslass mündenden konzentrischen Gasströmen (14, 16), von denen der erste Gasstrom (14) durch ein Rohr (13) geführt ist, welches von einem koaxialen, ringförmigen Kanal (15) zur Führung des zweiten Gasstroms (16) umgeben ist, wobei ein zum gemeinsamen Auslass (18) gerichtetes Ende (17) des Rohres (13) über dem Umfang verteilt zinnenartige Ausnehmungen (22, 22', 23, 23', 24, 24') aufweist, **dadurch gekennzeichnet, dass** die Ausnehmungen (22, 22', 23, 23', 24, 24') unregelmäßig über dem Umfang verteilt angeordnet sind und eine ungleichmäßige axiale Erstreckung und eine ungleichmäßige umfangsbezogene Erstreckung aufweisen.

2. Vorrichtung nach Anspruch 1, **dadurch gekennzeichnet, dass** die zinnenartigen Ausnehmungen (22, 22', 23, 23', 24, 24') als Rechteckprofil und/oder als Dreieckprofil und/oder als Wellenprofil ausgebildet sind.

3. Vorrichtung nach Anspruch 1 oder 2, **dadurch gekennzeichnet, dass** der erste Gasstrom (14) und der zweite Gasstrom (16) über den gemeinsamen Auslass (18) in einen Schalldämpfer (19) gelangen, und dass der gemeinsame Auslass (18) von einem Schneidring (20) mit einem größeren Durchmesser als der Auslass (18) radial umgeben ist.

4. Vorrichtung nach Anspruch 3, **dadurch gekennzeichnet, dass** das von dem Auslass (18) abgewandte Ende (17) des Schneidrings (20) eine weichelastische Lippe (21) aufweist.

5. Verwendung der Vorrichtung gemäß einem der Ansprüche 1 bis 4 in einem Regelventil (1) für ein Druckluftbremssystem eines Fahrzeugs zum Ausregeln eines einer gewünschten Bremswirkung entsprechenden Bremsdrucks, wobei das Regelventil (1) ein erstes pneumatisches Ventilsystem (10), das eine erste Entlüftungseinrichtung in Form des Rohres (13) zur Führung des ersten Gasstroms (14) aufweist, und ein zweites, durch das erste Ventilsystem (10) betätigbares zweites pneumatisches Ventilsystem (12) aufweist, welches das Rohr (13) zur Führung des ersten Gasstroms (14) radial umgreift und eine zweite Entlüftungseinrichtung in Form des koaxialen und ringförmigen, das Rohr (13) radial umgebenden Kanals (15) zur Führung des zweiten Gasstroms (16) aufweist, bei dem die beiden Entlüftungseinrichtungen in einen gemeinsamen Schalldämpfer (19) münden, und bei dem das dem Schalldämpfer (19) zugewandte Ende (17) des Rohres (13) die über dem Umfang verteilten zinnenartigen Ausnehmungen (22, 22', 23, 23', 24, 24') aufweist.

## Claims

1. A device for reducing the noise of two merged gas streams concentric gas streams (14, 16) which join in a common outlet, the first gas stream (14) is guided through a pipe (13) which is surrounded by a coaxial, annular channel (15) for guiding the second gas stream (16), wherein one end (17) of the pipe (13) aligned towards the common outlet (18) comprises crenellated recesses (22, 22', 23, 23', 24, 24') which are distributed on the periphery, **characterized in that** the recesses (22, 22', 23, 23', 24, 24') are distributed on the periphery in an irregular manner and comprise an uneven axial extension and an uneven peripheral-related extension.

2. The device according to claim 1, **characterized in that** the crenellated recesses (22, 22', 23, 23', 24, 24') are configured as rectangular profile and/or as a triangle profile and/or as a wave profile.

3. The device according to claim 1 or 2, **characterized in that** the first gas stream (14) and the second gas stream (16) reach a silencer (19) via the common outlet (18), and that the common outlet (18) is radially surrounded by a cutting ring (20) with a greater diameter than the outlet (18) .

4. The device according to claim 3, **characterized in that** the end (17) of the cutting ring (20) averted from the outlet (18) has a soft elastic lip (21).

5. Use of the device according to any of claims 1 to 4 in a regulating valve (1) for a compressed-air braking system of a vehicle for adjusting a braking pressure corresponding to a desired braking effect, wherein the regulating valve (1) has a first pneumatic valve system (10), which has a first venting device in the form of the pipe (13) for guiding the first gas stream (14), and a second pneumatic valve system (12) that can be actuated by the first valve system (10) which radially encompasses the pipe (13) for guiding the first gas stream (14) and a second venting device in the form of the coaxial and annular channel (15) radially surrounding the pipe (13) for guiding the second gas stream (16), in which the two venting devices join in a common silencer (19), and in which the end (17) of the pipe (13) facing the silencer (19) has the crenellated recesses (22, 22', 23, 23', 24, 24') distributed on the periphery.

## Revendications

1. Dispositif destiné à minimiser le bruit de deux flux gazeux (14, 16) concentriques guidés ensemble et qui débouchent dans une évacuation commune, dont le premier flux gazeux (14) est guidé à travers une conduite (13), laquelle est entourée par un canal (15) annulaire coaxial pour un guidage du second flux gazeux (16), dans lequel une extrémité (17) de la conduite (13) orientée vers l'évacuation (18) commune présente des évidements (22, 22', 23, 23', 24, 24') de type crénelé répartis sur la périphérie, **caractérisé en ce que** les évidements (22, 22', 23, 23', 24, 24') sont répartis irrégulièrement sur la périphérie et présentent une extension axiale inégale et une extension périphérique inégale.

2. Dispositif selon la revendication 1, **caractérisé en ce que** les évidements (22, 22', 23, 23', 24, 24') de type crénelé sont conçus en tant que profil rectangulaire et/ou en tant que profil triangulaire et/ou en tant que profil ondulé.

3. Dispositif selon la revendication 1 ou 2, **caractérisé en ce que** le premier flux gazeux (14) et le second flux gazeux (16) aboutissent via l'évacuation (18) commune jusque dans un amortisseur de bruit (19), et **en ce que** l'évacuation (18) commune est radialement entourée par une bague coupante (20) avec un diamètre supérieur à celui de l'évacuation (18).

4. Dispositif selon la revendication 3, **caractérisé en ce que** l'extrémité (17) de la bague coupante (20) opposée à l'évacuation (18) présente une lèvre élastique souple (21).

5. Utilisation du dispositif selon l'une des revendications 1 à 4 dans une soupape de réglage (1) pour un système de freinage à air comprimé d'un véhicule pour réguler une pression de freinage qui correspond à un effet de freinage souhaité, dans laquelle la soupape de réglage (1) présente un premier système de soupape (10) pneumatique, qui présente un premier équipement de ventilation sous la forme de la conduite (13) pour un guidage du premier flux gazeux (14), et un second système de soupape (12) pneumatique qui peut être actionné par le premier système de soupape (10), lequel second système de soupape enserre radialement la conduite (13) pour un guidage du premier flux gazeux (14) et présente un second équipement de ventilation sous la forme du canal (15) annulaire coaxial et qui entoure radialement la conduite (13) pour un guidage du second flux gazeux (16), où les deux équipements de ventilation débouchent dans un amortisseur de bruit (19) commun, et où l'extrémité (17) de la conduite (13) tournée vers l'amortisseur de bruit (19) présente les évidements (22, 22', 23, 23', 24, 24') de type crénelé répartis sur la périphérie.
